**Europäisches Patentamt**

(19) **European Patent Office**

**Office européen des brevets**

(11) Publication number : **0 306 224 B1**

(12) # EUROPEAN PATENT SPECIFICATION

(45) Date of publication of patent specification : **16.10.91 Bulletin 91/42**

(51) Int. Cl.⁵ : **C09C 1/24, C01G 49/06**

(21) Application number : **88307898.2**

(22) Date of filing : **25.08.88**

(54) **Iron oxide pigment showing golden color and process for producing the same.**

(30) Priority : **28.08.87 JP 215563/87**
**28.11.87 JP 301335/87**

(43) Date of publication of application :
**08.03.89 Bulletin 89/10**

(45) Publication of the grant of the patent :
**16.10.91 Bulletin 91/42**

(84) Designated Contracting States :
**DE FR GB NL**

(56) References cited :
**EP-A- 0 014 382**
**EP-A- 0 180 881**
**FR-A- 2 067 276**

(73) Proprietor : **TODA KOGYO CORP.**
**7-1 Yokogawa-Shinmachi Nishi-ku**
**Hiroshima-shi Hiroshima-ken (JP)**

(72) Inventor : **Kurata, Tokihiro**
**5-25-603 Eba-Honmachi Naka-ku**
**Hiroshima-shi Hiroshima-ken (JP)**
Inventor : **Katamoto, Tsutomu**
**5-14-20-2, Itsukaichi-chuo Saeki-ku**
**Hiroshima-shi Hiroshima-ken (JP)**
Inventor : **Horiishi, Nanao**
**3-29-5, Ushita-Higashi Higashi-ku**
**Hiroshima-shi Hiroshima-ken (JP)**
Inventor : **Kiyama, Masao**
**67-12 Kamigamo-Shobuen-cho Kita-ku**
**Kyoto-shi Kyoto-fu (JP)**

(74) Representative : **Woods, Geoffrey Corlett et al**
**J.A. KEMP & CO. 14 South Square Gray's Inn**
**London WC1R 5EU (GB)**

## Description

The present invention relates to an iron oxide pigment showing a golden color and a process for producing the same.

An iron oxide pigment showing a golden color in accordance with the present invention is chiefly used as a color pigment for paints, printing inks, cosmetics and so forth.

Hematite (colcothar) particles, which are typical of iron oxide pigments, show a red color, so that they are mixed with a carrier and widely used as a red color pigment for producing paints, printing inks and cosmetics. Plate-like hematite particles show a black purple color and are used as a black purple pigment. Since the plate-like hematite particles are oriented in a superposed state, they are excellent in the coating property, so that they are also used as an anti-corrosive pigment.

Generally, since iron oxide pigments are oxides, they have a high resistance to the acid in the vehicle in producing a paint and an excellent resistance to environment pollution.

However, goods have recently been required to have not only functional qualities but also sensuous quality characteristics. In particular, as to colors, a golden color having a metallic luster which will create the illusion of high quality has been strongly demanded.

A golden color having a metallic luster is conventionally economically obtained by blending a brass powder, a powder alloy of brass and zinc, or a mixed powder of a brass powder and a zinc powder into a vehicle.

A pigment showing a golden color has been in strong demand, as described above. However, if it is produced by the conventional method, since the pigment is a metal powder, the resistance to the acid in the vehicle is low, and the resistance to environment pollution or the like is also low, so that the stability is insufficient.

On the other hand, although an iron oxide pigment is excellent in the stability, as described above, no iron oxide pigment showing a golden color has yet been produced.

Accordingly, the establishment of the process for producing an iron oxide pigment which shows a golden color has been strongly demanded.

The present inventor has studied for the purpose of producing an iron oxide pigment which shows a golden color, and as a result, it has been found that an iron oxide pigment composed of plate-like hematite particles and showing a golden color is obtained by autoclaving an alkaline suspension of iron (III) hydroxide oxide particles, $\underline{FeO_x} \cdot Fe_2O_3$ ($0 \leqq x \leqq 1$) particles or a ferric salt, the alkaline suspension having a pH of not less than 9, and containing a 0.1 to 15.0 mol of water-soluble salt on the basis of 1 mol of Fe and an Si-containing compound which contains 1.5 to 20.0 mol% of Si on the basis of the total amount of Fe. The present invention has been achieved on the basis of this finding.

In a first aspect of the present invention, there is provided an iron oxide pigment comprising plate-like hematite particles having an average diameter of 0.5 to 5.0 µm, a thickness of 50 to 500 Å, a plate ratio (the ratio of the average particle diameter to the thickness) of 50 : 1 to 500 : 1, a lightness (L* value) of not less than 30, a hue ($\theta = \tan^{-1} b^*/a^*$) of not less than 50°, and a chroma ($C^*ab = \sqrt{a^{*2} + b^{*2}}$) of not less than 17 (wherein L*, a* and b* are values represented by the (L*, a*, b*) uniform sensory color space of the CIE 1976).

In a second aspect of the present invention, there is provided a process for producing an iron oxide pigment composed of plate-like hematite particles according to claim 1 and showing a golden color, said process comprising autoclaving an alkaline suspension of iron (III) hydroxide oxide particles, $\underline{FeO_x} \cdot Fe_2O_3$ ($0 \leqq x \leqq 1$) particles or a ferric salt, said alkaline suspension having a pH of not less than 9 and containing 0.1 to 15.0 mol of water-soluble salt on the basis of 1 mol of Fe, and an Si-containing compound which contains 1.5 to 20.0 mol% of Si on the basis of the total amount of Fe.

## BRIEF DESCRIPTION OF THE DRAWINGS

Fig. 1 is an X-ray diffraction pattern of plate-like hematite particles obtained in Example 1, wherein the peak A represents hematite ;

Fig. 2 is an electron micrograph (× 10,000) of the plate-like hematite particles obtained in Example 8 ; and

Figs. 3 and 4 are an X-ray diffraction pattern and an electron micrograph (× 10,000), respectively, of the plate-like hematite particles obtained in Example 11, the peak A in Fig. 3 representing hematite.

An iron oxide pigment showing a golden color of the present invention is composed of plate-like hematite particles obtained by autoclaving an alkaline suspension of iron (III) hydroxide oxide particles, $\underline{FeO_x} \cdot Fe_2O_3$ ($0 \leqq x \leqq 1$) particles or a ferric salt, the alkaline suspension having a pH of not less than 9, and containing a 0.1 to 15.0 mol of water-soluble salt on the basis of 1 mol of Fe and an Si-containing compound which contains 1.5 to 20.0 mol% of Si on the basis of the total amount of Fe.

Plate-like hematite particles according to the present invention have an average particle diameter of 0.5 to 5.0 µm, a thickness of 50 to 500 Å, a plate ratio (the ratio of the average particle diameter to the thickness)

2

of 50 : 1 to 500 : 1, a lightness (L* value) of not less than 30, a hue ($\theta$ = tan$^{-1}$ b*/a*) of not less than 50°, and a chroma (C*ab = $\sqrt{a^{*2} + b^{*2}}$) of not less than 17 (wherein L*, a* and b* are values represented by the (L*, a*, b*) uniform sensory color space of the CIE 1976).

Plate-like hematite particles having an average particle diameter of 1.0 to 4.0 μm, a thickness of 100 to 400 Å, a plate ratio of 100 : 1 to 300 : 1, a lightness (L* value) of 35 to 50, preferably 40 to 50, a hue ($\theta$ = tan$^{-1}$b*/a*) of not less than 50°, and a chroma (C*ab = $\sqrt{a^{*2} + b^{*2}}$) of not less than 20 are particularly preferred in the present invention.

The reason why the iron oxide pigment of the present invention shows a golden color is not clear, but the present inventors consider that it has some relation with the particle form of the hematite particles and the surface state of the particles.

Plate-like hematite particles are conventionally generally obtained by autoclaving an alkaline suspension of ferric ion which has a pH of not less than 9, as described in "Journal of the Japan Society of Colour Material" Vol. 60, No. 5 (1987) pp. 265 to 272, published by Shikizai Kyokai. The form of plate-like hematite particles produced is controlled by, for example, a method described in Japanese Patent Application Laid-Open (KOKAI) Nos. 61-174120 (1986) and 55-104923 (1980).

The plate-like hematite particles obtained by the method described in Japanese Patent Application Laid-Open (KOKAI) No. 61-174120 (1986) have an average particle diameter of 0.5 to 20 μm and a plate ratio of 20 : 1 to 100 : 1, and a hue ($\theta$ = tan$^{-1}$b*/a*) of not more than 50° or a chroma (C*ab = $\sqrt{a^{*2} + b^{*2}}$) of not more than 17.

The plate-like hematite particles obtained by the method described in Japanese Patent Application Laid-Open (KOKAI) No. 55-104923 (1980) have a hue ($\theta$ = tan$^{-1}$b*/a*) of not more than 50° or a chroma (C*ab = $\sqrt{a^{*2} + b^{*2}}$) of not more than 17. In both cases, the plate-like hematite particles obtained are completely different from those of the present invention.

Various conditions for obtaining plate-like hematite particles according to the present invention are set forth below.

The iron (III) hydroxide oxide particles may have any particle form such as an acicular form and a spindle form that is obtained by a conventional reaction method. It is possible to use a wet-cake obtained by washing a reaction mother liquor containing iron (III) hydroxide oxide with water, a dried wet-cake thereof or the reaction mother liquid.

As the $\underline{FeO_x} \cdot Fe_2O_3$ (0 $\leqq$ x $\leqq$ 1) particles are usable, for example, a wet-cake obtained by washing with water a reaction mother liquor containing particulate or cubic magnetite particles obtained by the reaction of ferrous salt and an aqueous alkaline solution, a dried wet-cake thereof or the reaction mother liquid, and acicular or spindle $\underline{FeO_x} \cdot Fe_2O_3$ (0 $\leqq$ x $\leqq$ 1) particles obtained by reducing or further oxidizing, if necessary, the above-mentioned acicular or spindle iron (III) hydroxide oxide particles.

As the ferric salt, ferric chloride, ferric sulfide, etc. are usable.

The pH of the alkaline suspension in the present invention is not less than 9, preferably not less than 12. If the pH is less than 9, acicular iron (III) hydroxide oxide particles or $\underline{FeO_x} \cdot Fe_2O_3$ (0 $\leqq$ x $\leqq$ 1) particles are disadvantageously mixed into the plate-like hematite particles.

The autoclaving method in the present invention is carried out by using an autoclave at a temperature of, ordinarily 150 to 330°C, preferably 200 to 300°C, more preferably 250 to 300°C for 2 to 6 hours. It is a general tendency that the higher the alkali concentration is, the lower is the reaction temperature for producing plate-like hematite particles. If the temperature is lower than 150°C, the suspension contains iron (III) hydroxide oxide, $FeO_x \cdot Fe_2O_3$ (0 $\leqq$ x $\leqq$ 1) or a ferric salt as it is, thereby producing no plate-like hematite particles. If the temperature is higher than 330°C, the production of plate-like hematite particles is possible, but when the safety of the autoclave is taken into consideration, the upper limit of the temperature is 330°C.

Examples of a water-soluble salt used in the present invention are the sulfates, nitrates, chlorides and acetates of alkaline metals.

The amount of water-soluble salt added is 0.1 to 15.0 mol, preferably 0.5 to 10.0 mol, more preferably 3.0 to 5.0 mol on the basis of 1 mol of Fe. If the water-soluble salt added is less than 0.1 mol, the color of the plate-like hematite particles produced becomes unfavorable. In particular, since the hue and the chroma of the particles are low, it is difficult to obtain the target plate-like hematite particles of the present invention. Even if the water-soluble salt added is more than 15 mol, it is possible to obtain the target plate-like hematite particles of the present invention, but the addition of water-soluble salt more than necessary is useless.

As examples of the Si-containing compound used in the present invention, the silicates of potassium and sodium, and colloidal silica may be exemplified.

The Si-containing compound is added so that 1.5 to 20.0 mol%, preferably 5.0 to 15.0 mol% of Si is contained in the alkaline solution on the basis of the total amount of Fe. If the amount of the Si-containing compound added is less than 1.5 mol% in terms of Si on the basis of the total amount of Fe, the thickness of the plate-like hematite particles becomes more than 500 Å and, hence, the plate ratio becomes small, so that the plate-like hematite particles take on a black purple color. On the other hand, if it is more than 20 mol% in terms of Si on the basis of the total amount of Fe, the thickness of the plate-like hematite particles becomes smaller than 50 Å, which is apt to result in the phenomenon of destruction of the particle form.

The water-soluble salt and the Si-containing compound in the present invention exert an influence on the particle form and the surface property of the plate-like hematite particles produced. It is, therefore, necessary to add the water-soluble salt and the Si-containing compound before the reaction of producing the plate-like hematite particles.

The water-soluble salt may be added before, simultaneously with, or after the addition of the Si-containing compound.

The average particle diameter of the plate-like hematite particles is apt to be increased in proportion to the amount of water-soluble salt added, and the thickness of the plate-like hematite particles is apt to be reduced and, hence, the plate ratio is increased in proportion to the amount of Si-containing compound added.

Since an iron oxide pigment according to the present invention is composed of plate-like hematite particles having an average particle diameter of 0.5 to 5.0 µm, a thickness of 50 to 500 Å, a plate ratio of 50 : 1 to 500: 1, a lightness ($L^*$ value) of not less than 30, a hue ($\theta = \tan^{-1} b^*/a^*$) of not less than 50° and a chroma ($C^*ab = \sqrt{a^{*2} + b^{*2}}$) of not less than 17 and a vehicle for paints, printing inks and cosmetics, the pigment shows a golden color and is excellent in the stability. Thus, the iron oxide pigment of the present invention is suitable as a golden color pigment for paints, printing inks and cosmetics.

The present invention will be explained in more detail in the following Examples.

The average particle diameters in the following Examples and Comparative Examples are the average values of the values measured from the electron micrographs. The thickness and the plate ratios are represented by the values obtained from the specific surfaces measured by the BET method and the above-mentioned average particle diameters.

The $L^*$ value (lightness), $a^*$ and $b^*$ values are represented by the respective values of the samples measured in the Lab space of Hunter by using a color machine CM-1500-A (produced by Color Machine K.K.) in accordance with the ($L^*$, $a^*$, $b^*$) uniform sensory color space of Commission Internationale de l'Eclairage, CIE (1976).

The samples for measurement were obtained by kneading 0.5 g of hematite particle and 1.0 cc of castor oil by a Huber type muller thereby obtaining a paste and adding 4.5 g of a clear lacquer to the paste thereby obtaining a paint, and coating on cast-coated paper with the paint by using a 6-mil applicator.

Example 1

An alkaline suspension of pH 13.8 which was obtained by mixing 0.2 mol of α-FeOOH (major axis : 1.0 µm, BET specific surface 50.2 m²/g), 0.6 mol of NaNO₃ (which is equivalent to 3 mol on the basis of 1 mol of Fe), 4.21 g of water-glass No. 3 (SiO₂ 28.55 wt%, containing 10 mol% of Si on the basis of the total amount of Fe) and 1.0 mol of NaOH was heated to 280°C in an autoclave. This temperature was maintained for 2 hours while mechanically stirring the suspension, thereby producing a yellowish brown precipitate.

After the mixture was cooled to room temperature, the yellowish brown precipitate was filtered out. The precipitate was thoroughly washed with water and then dried.

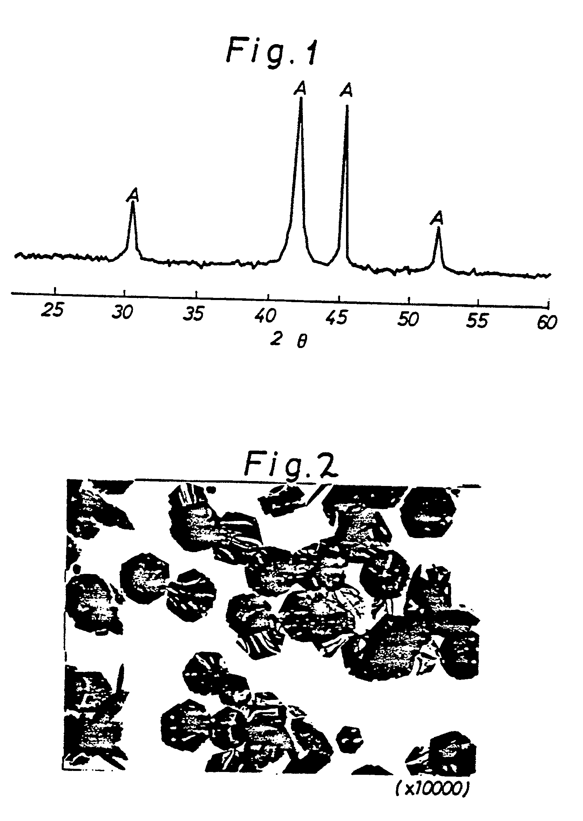

The particles obtained was hematite particles showing a golden color, as shown in the X-ray diffraction pattern of Fig. 1. The average particle diameter was 2.4 µm, the BET specific surface was 22.6 m²/g, the thickness was 180 Å and the plate ratio was 133 : 1. In Fig. 1, the peak A represents hematite.

The clearness ($L^*$ value) of the particles was 44.9, the hue was 64.5° and the chroma was 27.5.

Examples 2 to 10, Comparative Examples 1 to 3

Plate-like hematite particles were produced in the same way as in Example 1 except that the kind and the concentration of the iron material, the amount of NaOH, the kind and the amount of water-soluble salt added, the kind and the amount of Si-containing compound added, the pH of the suspension, and the temperature and the time for autoclaving method were varied as shown in Table 1. The properties of the plate-like hematite particles showing a golden color obtained are shown in Table 1. Fig. 2 is an electron micrograph (× 10,000) of the plate-like hematite particles obtained in Example 8.

Table 1

| Example and Comparative Example | Conditions for producing plate-like hematite particles | | | | | | | | | |
|---|---|---|---|---|---|---|---|---|---|---|
| | Iron material | | Amount of NaOH (mol) | Water-soluble salt | | Si-containing compound | | pH | Auto claving treatment | |
| | Kind | Amount (mol) | | Kind | Amount (molar ratio) | Kind | Amount (mol%) | | Tempera-ture (°C) | time (hours) |
| Example 1 | Acicular α-FeOOH (Major axis 1.0µm, BET 50.2m²/g) | 0.2 | 1.0 | NaNO₃ | 3 | Water-glass No. 3 | 10 | 13.8 | 280 | 2 |
| " 2 | " | 0.2 | 1.0 | Na₂SO₄ | 1 | " | 10 | 13.8 | 280 | 4 |
| " 3 | " | 0.2 | 1.0 | NaNO₃ | 15 | " | 15 | 13.8 | 300 | 2 |
| " 4 | " | 0.2 | 1.0 | NaCl | 5 | " | 10 | 13.8 | 250 | 4 |
| " 5 | " | 0.1 | 0.1 | Na₂SO₄ | 3 | " | 5. | 12.8 | 280 | 2 |
| " 6 | " | 0.5 | 1.0 | KCl | 5 | " | 5 | 13.8 | 250 | 4 |
| " 7 | Acicular Fe₃O₄ (Major axis 1.0µm, BET 28.6m²/g) | 0.1 | 3.0 | KNO₃ | 15 | " | 20 | 14.3 | 280 | 4 |
| " 8 | Spindle α-FeOOH | 0.2 | 1.0 | NaNO₃ | 5 | " | 10 | 13.8 | 250 | 4 |
| " 9 | Acicular α-FeOOH (Major axis 2.0µm, BET 13.4m²/g) | 0.2 | 1.0 | NaNO₃ | 3 | " | 10 | 13.8 | 280 | 2 |
| " 10 | Acicular α-FeOOH (Major axis 0.15µm, BET 102m²/g) | 0.2 | 1.0 | NaNO₃ | 3 | Colloidal silica | 10 | 13.8 | 300 | 2 |
| Comparative Example 1 | Acicular α-FeOOH in Ex. 1 | 0.2 | 1.0 | - | - | - | - | 13.8 | 280 | 2 |
| " 2 | " | 0.2 | 1.0 | - | - | Water-glass No. 3 | 10 | 13.8 | 280 | 2 |
| " 3 | " | 0.2 | 1.0 | NaNO₃ | 3 | - | - | 13.8 | 200 | 2 |

Table 1 (continued)

| Properties of plate-like hematite particles | | | | | |
|---|---|---|---|---|---|
| Average diameter d (µm) | Thickness (Å) | Plate ratio (Average diameter : thickness) | Lightness L* | Hue $\theta = \tan^{-1} b*/a*$ | Chroma $C_{ab}* = \sqrt{a*^2 + b*^2}$ |
| 2.4 | 180 | 133 : 1 | 44.9 | 64.5 | 27.5 |
| 1.8 | 170 | 106 : 1 | 42.3 | 60.3 | 25.1 |
| 3.1 | 265 | 117 : 1 | 43.1 | 63.1 | 27.4 |
| 2.7 | 240 | 123 : 1 | 45.1 | 64.1 | 28.3 |
| 0.8 | 95 | 84 : 1 | 41.7 | 54.7 | 23.4 |
| 2.9 | 260 | 112 : 1 | 44.2 | 60.7 | 23.7 |
| 3.9 | 300 | 130 : 1 | 40.5 | 54.5 | 23.6 |
| 1.2 | 95 | 126 : 1 | 44.2 | 59.8 | 24.6 |
| 4.5 | 355 | 127 : 1 | 41.3 | 53.8 | 22.5 |
| 0.5 | 75 | 67 : 1 | 41.2 | 54.3 | 23.1 |
| 1.2 | 3510 | 3.4 : 1 | 20.5 | 17.2 | 14.3 |
| 0.8 | 220 | 36 : 1 | 38.9 | 47.5 | 16.4 |
| 2.6 | 2590 | 10 : 1 | 23.1 | 12.1 | 8.7 |

Example 11

An alkaline suspension of pH 13.8 which was obtained by mixing 0.2 mol of $Fe(NO_3)_3$, 0.6 mol of $NaNO_3$ (which is equivalent to 3 mol on the basis of 1 mol of Fe), 4.21 g of water-glass No. 3 ($SiO_2$ 28.55 %, containing 10 mol% of Si on the basis of the total amount of Fe) and 1.6 mol of NaOH was heated to 200°C in an autoclave. This temperature was maintained for 2 hours while mechanically stirring the suspension, thereby producing a yellowish brown precipitate. The $NaNO_3$ in the alkaline suspension is equivalent to 3.6 mol on the basis of 1 mol of Fe in the total amount of by-product salt and $NaNO_3$ added.

After the mixture was cooled to room temperature, the yellowish brown precipitate was filtered out. The precipitate was thoroughly washed with water and then dried.

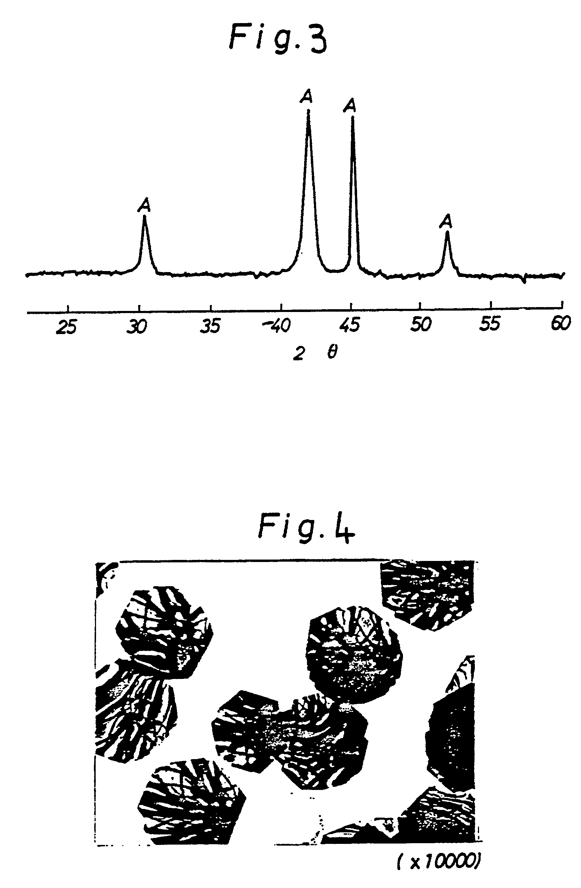

The particles obtained was hematite particles showing a golden color, as shown in the X-ray diffraction pattern of Fig. 3. The average particle diameter was 2.4 µm, the BET specific surface was 20.4 m²/g, the thickness was 200 Å and the plate ratio was 120 : 1, as is clear from the electron micrograph (× 10,000) of Fig. 4. In Fig. 3, the peak A represents hematite.

The clearness (L* value) of the particles was 43.6, the hue was 64.3° and the chroma was 26.4.

Examples 12 to 16, Comparative Examples 4 and 5

Plate-like hematite particles were produced in the same way as in Example 11 except that the kind and the concentration of the ferric salt, the amount of NaOH, the kind and the content of water-soluble salt added, the kind and the content of Si-containing compound added, the pH of the suspension, and the temperature and the time for autoclaving treatment were varied as shown in Table 2. The properties of the hematite particles showing a golden color obtained are shown in Table 2.

7

Table 2

| Example and Comparative Example | Conditions for producing plate-like hematite particles | | | | | | | | | | | | |
| --- | --- | --- | --- | --- | --- | --- | --- | --- | --- | --- | --- | --- | --- |
| | Iron material | | Amount of NaOH (mol) | Water-soluble salt | | | | | Si-containing compound | | pH | Auto claving treatment | |
| | | | | By-product salt | | Salt added | | Content ratio (molar ratio) | | | | | |
| | Kind | Amount (mol) | | Kind | Amount (molar ratio) | Kind | Amount (molar ratio) | | Kind | Content (mol%) | | Temperature (°C) | time (hours) |
| Example 11 | Fe(NO₃)₃ | 0.2 | 1.6 | NaNO₃ | 0.6 | NaNO₃ | 3.0 | 3.6 | Water-glass No. 3 | 10 | 13.8 | 200 | 2 |
| " 12 | FeCl₃ | 0.5 | 2.5 | NaCl | 1.5 | Na₂SO₄ | 2.0 | 3.5 | " | 10 | 13.8 | 280 | 2 |
| " 13 | Fe₂(SO₄)₃ | 0.1 | 3.6 | Na₂SO₄ | 0.15 | KNO₃ | 3.0 | 3.15 | " | 20 | 14.3 | 250 | 2 |
| " 14 | Fe(NO₃)₃ | 0.2 | 0.7 | NaNO₃ | 0.6 | KCl | 3.0 | 3.6 | " | 5 | 12.8 | 200 | 2 |
| " 15 | " | 0.2 | 1.6 | " | 0.6 | NaCl | 14.0 | 14.6 | " | 15 | 13.8 | 250 | 2 |
| " 16 | FeCl₃ | 0.1 | 1.3 | NaCl | 0.3 | " | 5.0 | 5.3 | Colloidal silica | 10 | 13.8 | 200 | 2 |
| Comparative Example 4 | Fe(NO₃)₃ | 0.2 | 1.6 | NaNO₃ | 0.6 | − | − | 0.6 | − | − | 13.8 | 200 | 2 |
| " 5 | " | 0.2 | 1.6 | " | 0.6 | NaNO₃ | 3.0 | 3.6 | − | − | 13.8 | 200 | 2 |

Table 2 (continued)

| Properties of plate-like hematite particles | | | | | |
|---|---|---|---|---|---|
| Average diameter d (μm) | Thickness t (Å) | Plate ratio (Average diameter : thickness) | Lightness L* | Hue $\theta =$ $\tan\ b^*/a^*$ | Chroma $C_{ab}^* = \sqrt{a^{*2} + b^{*2}}$ |
| 2.4 | 200 | 120 : 1 | 43.6 | 64.3 | 26.4 |
| 2.0 | 180 | 111 : 1 | 42.4 | 62.1 | 27.3 |
| 3.2 | 290 | 110 : 1 | 43.1 | 59.8 | 26.8 |
| 1.0 | 110 | 91 : 1 | 42.1 | 55.6 | 24.3 |
| 3.5 | 270 | 130 : 1 | 44.2 | 60.0 | 26.7 |
| 2.7 | 240 | 113 : 1 | 43.6 | 63.1 | 27.0 |
| 1.2 | 3230 | 3.7 : 1 | 22.1 | 17.9 | 15.3 |
| 2.5 | 2560 | 9.8 : 1 | 24.1 | 13.2 | 9.1 |

EP 0 306 224 B1

**Claims**

1. An iron oxide pigment comprising plate-like hematite particles having an average diameter of from 0.5 to 5.0 μm, a thickness of from 5 to 50 nm (50 to 500 Å), a plate ratio (the ratio of the average diameter to the thickness) of from 50 : 1 to 500 : 1, a lightness (L* value) of not less than 30, a hue ($\theta = tan^{-1}b^*/a^*$) of not less than 50° and a chroma ($C^*ab = \sqrt{a^{*2} + b^{*2}}$) of not less than 17 (wherein L*, a* and b* are values represented by the (L*, a*, b*) uniform sensory color space of the CIE 1976).

2. A pigment according to claim 1, wherein the said plate-like hematite particles have an average diameter of from 1.0 to 4.0 μm, a thickness of from 10 to 40 nm (100 to 400 Å), a plate ratio of from 100 : 1 to 300 : 1, a lightness (L* value) of 35 to 50, a hue ($\theta = tan^{-1}b^*/a^*$) of not less than 50° and a chroma ($C^*ab = \sqrt{a^{*2} + b^{*2}}$) of not less than 20.

3. A process for producing an iron oxide pigment composed of plate-like hematite particles according to claim 1, which process comprises autoclaving an alkaline suspension of iron (III) hydroxide oxide particles, $\underline{FeO_x} \cdot Fe_2O_3$ ($0 \leqq x \leqq 1$) particles or a ferric salt, the said alkaline suspension having a pH of not less than 9 and containing from 0.1 to 15.0 mol of a water-soluble salt per mol of Fe and a Si-containing compound in an amount of from 1.5 to 20.0 mol% calculated on the basis of the Si therein with respect to total amount of Fe.

4. A process according to claim 3, wherein the autoclave method is carried out at a temperature of from 200 to 300°C.

5. A process according to claim 3 or 4, wherein the water-soluble salt is a sulfate, nitrate, chloride or acetate of an alkali metal.

6. A process according to claim 5, wherein the alkali metal is sodium or potassium.

7. A process according to any one of claims 3 to 6, wherein the pH of the said alkaline suspension is not less than 12.

8. A process according to any one of claims 3 to 7, wherein the Si-containing compound is the silicate of potassium or sodium or is colloidal silica.

9. A process according to any one of claims 3 to 8, wherein the Si-containing compound is added in an amount of from 5.0 to 15.0 mol% calculated on the basis of the Si therein with respect to the total amount of Fe.

10. A paint, ink or cosmetic incorporating an iron oxide pigment as claimed in claim 1 or 2 or which has been produced by a process as claimed in any one of claims 3 to 9.

**Patentansprüche**

1. Eisenoxidpigment, umfassend plättchenartige Hämatitteilchen mit einem durchschnittlichen Durchmesser von 0,5 bis 5,0 μm, einer Dicke von 5 bis 50 nm (50 bis 500 Angström), einem Plättchenverhältnis (Verhältnis von durchschnittlichem Durchmesser zur Dicke) von 50 : 1 bis 500 : 1, einer Helligkeit (L*-Wert) von nicht weniger als 30, einem Farbton (Theta = $tan^{-1}b^*/a^*$) von nicht weniger als 50° und einer Farbsättigung ($C^*ab = \sqrt{a^{*2} + b^{*2}}$) von nicht weniger als 17 (wobei L*, a* und b* Werte sind, die durch die (L*, a*, b*)-Einheitssensorfarbvalenzen von CIE 1976 dargestellt werden).

2. Pigment nach Anspruch 1, wobei die plättchenartigen Hämatitteilchen einen durchschnittlichen Durchmesser von 1,0 bis 4,0 μm, eine Dicke von 10 bis 40 nm (100 bis 400 Angström), ein Plättchenverhältnis von 100 : 1 bis 300 : 1, eine Helligkeit (L*-Wert) von 35 bis 50, einen Farbton (Theta = $tan^{-1}b^*/a^*$) von nicht weniger als 50° und eine Farbsättigung ($C^*ab = \sqrt{a^{*2} + b^{*2}}$) von nicht weniger als 20 aufweisen.

3. Verfahren zur Herstellung eines Eisenoxidpigmentes, das aus plättchenartigen Hämatitteilchen gemäss Anspruch 1 zusammengesetzt ist, wobei das Verfahren die Behandlung einer alkalischen Suspension von Eisen (III) hydroxidoxidteilchen, $\underline{FeO_x} \cdot Fe_2O_3$ ($0 \leqq x \leqq 1$)-Teilchen oder eines Eisen (III) salzes im Autoklaven umfasst, wobei die alkalische Suspension einen pH-Wert von nicht weniger als 9 besitzt und 0,1 bis 15,0 Mol eines wasserlöslichen Salzes pro Mol Fe und eine Si-haltige Verbindung in einer Menge von 1,5 bis 20,0 Mol.%, berechnet auf der Basis des darin enthaltenen Si, im Hinblick auf die Gesamtmenge an Fe, enthält.

4. Verfahren nach Anspruch 3, wobei das Autoklavenverfahren bei einer Temperatur von 200 bis 300°C durchgeführt wird.

5. Verfahren nach Anspruch 3 oder 4, wobei das wasserlösliche Salz ein Sulfat, Nitrat, Chlorid oder Acetat eines Alkalimetalles ist.

6. Verfahren nach Anspruch 5, wobei das Alkalimetall Natrium oder Kalium ist.

7. Verfahren nach einem der Ansprüche 3 bis 6, wobei der pH-Wert der alkalischen Suspension nicht weniger als 12 beträgt.

8. Verfahren nach einem der Ansprüche 3 bis 7, wobei die Si-haltige Verbindung das Silikat von Kalium oder Natrium oder kolloidales Siliziumdioxid ist.

9. Verfahren nach einem der Ansprüche 3 bis 8, wobei die Si-haltige Verbindung in einer Menge von 5,0 bis 15,0 Mol.%, berechnet auf der Grundlage des darin enthaltenen Si, im Hinblick auf die Gesamtmenge an Fe, hinzugegeben wird.

10. Farbe, Tinte oder Kosmetikum, in denen ein Eisenoxidpigment gemäss Anspruch 1 oder 2 eingearbeitet ist, oder die durch ein Verfahren gemäss einem der Ansprüche 3 bis 9 hergestellt sind.

## Revendications

1. Pigment d'oxyde de fer comprenant des particules d'hématite en paillettes possédant un diamètre moyen allant de 0,5 à 5,0 μm, une épaisseur de 5 à 50 nm (50 à 500 Å), un rapport de paillette (le rapport du diamètre moyen à l'épaisseur) de 50 : 1 à 500 : 1, une luminance (valeur L\*) non inférieure à 30, une teinte ($\theta$ = $\tan^{-1}$ b\*/a\*) non inférieure à 50° et une chromaticite (C\* ab = $\sqrt{a^{*2} + b^{*2}}$) non inférieure à 17 (où L\*, a\* et b\* sont des valeurs représentées par l'espace des couleurs sensorielles uniformes (L\*, a\*, b\*) de la CIE 1976.

2. Pigment selon la revendication 1, dans lequel lesdites particules d'hématite en paillettes ont un diamètre moyen allant de 1,0 à 4,0 μm, une épaisseur de 10 à 40 nm (100 à 400 Å), un rapport de paillette de 100 : 1 à 300 : 1, une luminance (valeur L\*) de 35 à 50, une teinte ($\theta$ = $\tan^{-1}$ b\*/a\*) supérieure à 50° et une chromaticité (C\*ab = $\sqrt{a^{*2} + b^{*2}}$) non inférieure à 20.

3. Procédé de fabrication d'un pigment d'oxyde de fer composé de particules d'hématite en paillettes selon la revendication 1, lequel procédé comprend un traitement à l'autoclave d'une suspension alcaline de particules d'oxyde monohydrate de fer (III) de particules $\underline{FeO_x}$, $Fe_2O_3$ ($0 \leqq x \leqq 1$) ou d'un sel ferrique, ladite suspension alcaline ayant un pH non inférieur à 9 et contenant de 0,1 à 15,0 mol de sel hydrosoluble par mol de Fe et un composé à base de Si en quantité allant de 1,5 à 20,0 mol% calculée sur la base du Si présent par rapport à la quantité totale de Fe.

4. Procédé selon la revendication 3, dans lequel le traitement à l'autoclave est réalisé à une température allant de 200 à 300°C.

5. Procédé selon la revendication 3 ou 4, dans lequel le sel hydrosoluble est un sulfate, un nitrate, un chlorure ou un acétate d'un métal alcalin.

6. Procédé selon la revendication 5, dans lequel le métal alcalin est le sodium ou le potassium.

7. Procédé selon l'une quelconque des revendications 3 à 6, dans lequel le pH de ladite suspension alcaline n'est pas inférieur à 12.

8. Procédé selon l'une quelconque des revendications 3 à 7, dans lequel le composé à base de Si est le silicate de potassium ou sodium ou est une silice colloïdale.

9. Procédé selon l'une quelconque des revendications 3 à 8, dans lequel le composé à base de Si est ajouté en quantité allant de 5,0 à 15,0 mol% calculée sur la base du Si présent par rapport à la quantité totale de Fe.

10. Peinture, encre ou cosmétique incorporant un pigment d'oxyde de fer selon les revendications 1 ou 2 ou qui a été fabriqué par un procédé selon l'une quelconque des revendications 3 à 9.

## Fig.1

## Fig.2

(x10000)

*Fig. 3*

*Fig. 4*

( x 10000)